# EUROPEAN PATENT SPECIFICATION

(11) **EP 2 603 694 B1**
(45) Date of publication and mention of the grant of the patent: **16.12.2015**
(21) Application number: 11743424.1
(22) Date of filing: 05.08.2011
(51) Int. Cl.: F03D 1/06

(54) **ROTOR BLADE FOR A WIND TURBINE AND METHOD OF MAKING SAME**
LAUFSCHAUFEL FÜR EINE WINDTURBINE UND HERSTELLUNGSVERFAHREN DAFÜR
PALE DE ROTOR POUR TURBINE ÉOLIENNE ET SON PROCÉDÉ DE FABRICATION

(30) Priority: 02.09.2010 DK 201070383; 11.08.2010 US 372600 P
(43) Date of publication of application: 19.06.2013
(73) Proprietor: Vestas Wind Systems A/S, 8200 Aarhus N (DK)
(72) Inventor: VUILLAUME, Amaury, Cowes Isle of Wight PO31 8JY (GB); PAYNE, Chris, Bristol BS21 5BY (GB); HAHN, Frank, Hoelgaard, DK-6950 Ringkøbing (DK)
(74) Representative: Vestas Patents Department
(86) International application number: PCT/DK2011/050303
(87) International publication number: WO 2012/019611

(56) References cited:
- WO-A2-2010/092168
- GB-A- 707 620
- JP-A- 7 279 819

## Description

### Technical Field

The invention relates generally to a rotor blade for a wind turbine and a method of making same, and more particularly, to a spar of such a rotor blade having features configured to improve its use and functionality.

### Background

A typical construction for a rotor blade of a wind turbine includes an outer shell and a longitudinally-directed load bearing inner member referred to as a spar. The spar extends from a root end of the rotor blade toward a tip end of the rotor blade and is configured to transfer loads placed on the rotor blade to the hub of the wind turbine. One conventional arrangement for a spar includes a leading web near the leading edge of the outer shell, a trailing web closer to the trailing edge of the outer shell, and leeward and windward caps coupled to the leading web and the trailing web. The webs and the caps collectively define a circular cross section of the spar at the root end of the rotor blade, but then each of the webs and the caps flattens toward the tip end of the rotor blade into a more rectangular cross section of the spar. The spar generally defines a center of elasticity for the rotor blade.

As the size of wind turbines increases, the corresponding size of rotor blades also increases. In this regard, the width or distance between the trailing edge and the leading edge of the outer shell increases. Thus, forces applied to the rotor blade along the width have a more detrimental effect on the rotor blades because the trailing edge and the leading edge are farther away from the center of elasticity of the load-bearing spar. To address these shortcomings, rotor blade manufacturers have added an additional trailing web to the spar. The additional trailing web couples to the windward cap and the leeward cap at the root end of the rotor blade, and then extends away from the windward cap and the leeward cap toward the trailing edge of the outer shell. As a result, the spar has more load-bearing elements closer to the trailing edge of the outer shell, thereby improving the resistance of the rotor blade to forces applied along the width of the rotor blade.

Document WO 2010/092168 shows an example of the prior art mentioned above.

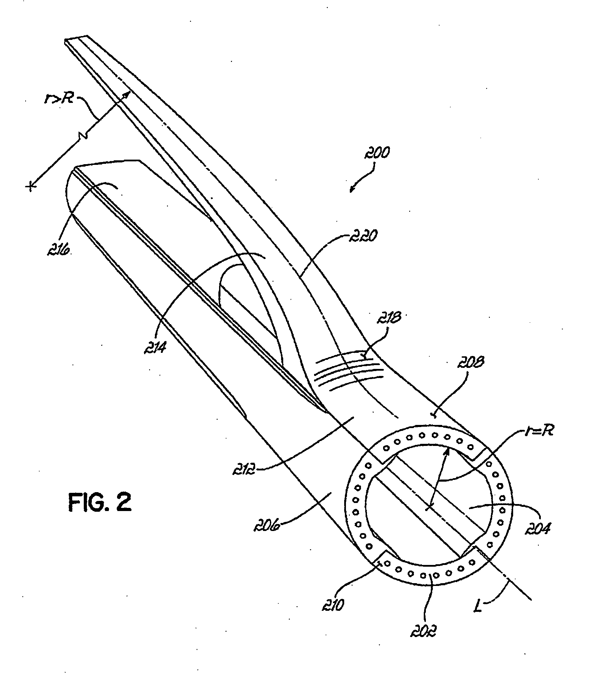

Nevertheless, the incorporation of an additional trailing web into a spar has presented its own set of issues. For example, the additional trailing web defines a spine along a longitudinal centerline of the additional trailing web, that spine representing a load path for the spar to transfer loads to the hub. It is desirable to keep this load path or spine as straight as possible so that weakened areas of the spar are not formed. However, the additional trailing web must also be coupled to the leeward cap and the windward cap over an elongate length such that loading stresses in the spar are minimized to avoid breaking the additional trailing web from the caps. As shown in Fig. 2 of the present application, this elongate connection to the leeward cap and the windward cap results in the additional trailing web forming a "kink" upwardly toward the trailing edge just beyond the end of the elongate connection. As clearly shown in this figure, this kink is thus incorporated into the spine or load path of the additional trailing web, forming a potential buckling point for the spar. In effect, this kink may create a weakened loading point in the spar and therefore limit the load-bearing capacity of the spar.

Thus, while conventional spars are generally successful for their intended purpose, there remains a need for an improved spar that addresses these and other shortcomings in conventional rotor blade construction.

### Summary

According to one embodiment of the invention, a rotor blade for a wind turbine includes an outer shell and a spar for transferring loads from the outer shell. The outer shell has a root end, a tip end, and an intermediate portion between the root end and the tip end. The spar extends longitudinally within the outer shell from the root end toward the tip end. The spar includes at least one web having a first portion and a second portion. The first portion defines a cross-sectional radius of curvature that generally decreases from the root end to the intermediate portion. The second portion may additionally define a cross-sectional radius of curvature that generally increases from the intermediate portion toward the tip end. The at least one web defines a partially-circular cross section at the root end and a partially-elliptical cross section along the first portion away from the root end. The at least one web also defines a longitudinal spine that bisects the web and defines a generally straight load path along the first portion of the web. In this regard, the longitudinal spine has a longitudinal curvature of about zero along a substantial portion of the first portion. Thus, the spar improves load-bearing characteristics of the rotor blade.

In this invention, the spar includes a leading web coupled to a windward cap and a leeward cap along a length of the spar. According to the invention, the at least one web is a trailing web that is coupled to the windward cap and the leeward cap along the first portion of the trailing web. According to the invention, the trailing web is then spaced from the windward cap and the leeward cap along the second portion of the trailing web. At least one spacing member may be positioned between the trailing web and the leeward and windward caps along this second portion of the trailing web. The spar also includes a secondary trailing web that is spaced from the trailing web and coupled to the leeward cap and the windward cap along the second portion of the trailing web. Alternatively, the spar may include a wound root portion, the at least one web being a trailing web coupled to the wound root portion along the first portion of the trailing web.

In another embodiment of the invention, a wind turbine includes a tower, a hub supported by the tower, and a plurality of rotor blades extending from the hub. Each of the rotor blades includes an outer shell and a spar for transferring loads from the outer shell. As described above, the spar again includes at least one web having a first portion and a second portion. The first portion defines a cross-sectional radius of curvature that generally decreases from the root end to the intermediate portion. The second portion may additionally define a cross-sectional radius of curvature that generally increases from the intermediate portion toward the tip end.

In yet another embodiment of the invention, a method for manufacturing a spar for supporting loads on a rotor blade is provided as claimed in claim 11. The rotor blade extends in a longitudinal direction from a root end toward a tip end with an intermediate portion between the root end and the tip end. The method includes coupling a leading web to at least one cap. The method also includes coupling a first portion of a trailing web to the at least one cap. The trailing web includes a first portion having a cross-sectional radius of curvature that decreases from the root end to the intermediate portion, and may further have a second portion having a cross-sectional radius of curvature that increases from the intermediate portion toward the tip end.

### Brief Description of the Drawings

The accompanying drawings, which are incorporated in and constitute a part of this specification, illustrate an embodiment of the invention and, together with a general description of the invention given above, and the detailed description given below, serve to explain the invention.
Fig. 1 is a perspective view of a wind turbine with rotor blades according to an exemplary embodiment of the invention;
Fig. 2 is a perspective view of a previous spar configured for use in the rotor blades of Fig. 1;
Fig. 3 is a perspective view of a spar of the rotor blade of Fig. 1 according to an exemplary embodiment of the invention;
Fig. 4 is a cross-sectional front view of the spar of Fig. 3, and taken generally along line 4-4 as shown in Fig. 5;
Fig. 5 is a cross-sectional side view of the spar of Fig. 3 adjacent a root end of the rotor blade, and taken generally along line 5-5 as shown in Fig. 4;
Fig. 6 is a cross-sectional side view of the spar of Fig. 3 adjacent an intermediate portion of the rotor blade, and taken generally along line 6-6 as shown in Fig. 4;
Fig. 7 is another cross-sectional side view of the spar of Fig. 3 adjacent an intermediate portion of the rotor blade, and taken generally along line 7-7 as shown in Fig. 4;
Fig. 8 is another cross-sectional side view of the spar of Fig. 3 adjacent an intermediate portion of the rotor blade, and taken generally along line 8-8 as shown in Fig. 4;
Fig. 9 is a cross-sectional side view of the spar of Fig. 3 adjacent a tip end of the rotor blade, and taken generally along line 9-9 as shown in Fig. 4;
Fig. 10 is a perspective view of a spar of the rotor blade of Fig. 1 according to another embodiment of the invention; and
Fig. 11 is a perspective view of a spar of the rotor blade of Fig. 1 according to yet another embodiment of the invention.

### Detailed Description

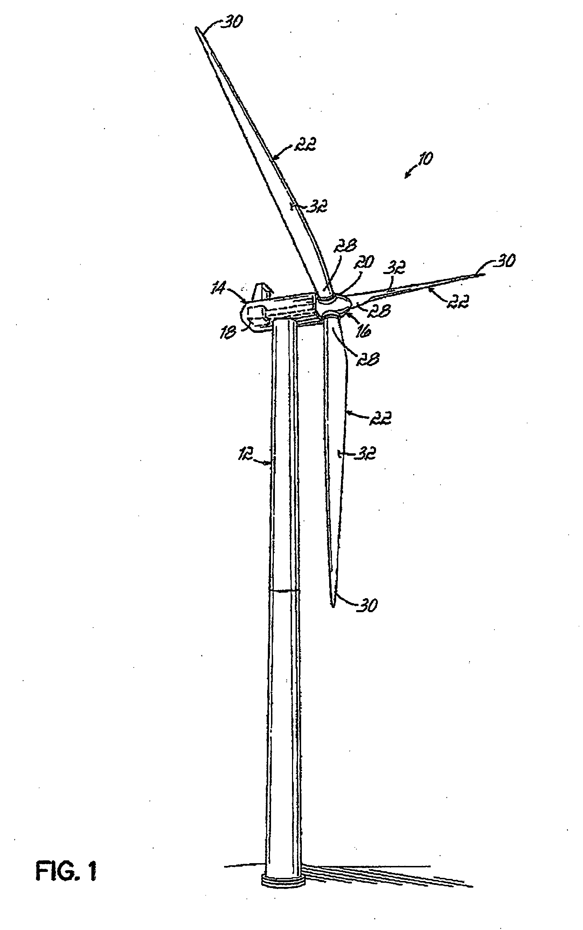

With reference to the figures, and more specifically to Fig. 1, an exemplary wind turbine 10 includes a tower 12, a nacelle 14 at the apex of the tower 12, and a rotor 16 operatively coupled to a generator 18 housed inside the nacelle 14. The wind turbine 10, which is represented as a horizontal-axis wind turbine, has the ability to convert the kinetic energy of the wind into electrical energy. In addition to the generator 18, nacelle 14 houses various components needed to convert the wind energy into electrical energy and also various components needed to operate and optimize the performance of the wind turbine 10. The tower 12 supports the load presented by the nacelle 14, rotor 16, and other wind turbine components housed inside the nacelle 14 and operates to elevate the nacelle 14 and rotor 16 to a height above ground level or sea level, as may be the case, at which wind, with faster moving air characterized by smoother and less turbulent air currents, is typically found.

The rotor 16 includes a central hub 20 and a plurality of rotor blades 22 attached to and extending outwardly from the central hub 20 at locations distributed about the circumference of the central hub 20. In the representative embodiment, the rotor 16 includes three blades 22. The blades 22, which project radially outward from the central hub 20, are configured to interact with the passing air flow to produce lift that causes the central hub 20 to spin about its longitudinal axis. The functionality of the blades 22 is familiar to a person having ordinary skill in the art. For example, each of the blades 22 is connected to the central hub 20 through a pitch mechanism that allows the blade to pitch under control of a pitch controller (not shown). Wind exceeding a minimum level will activate the rotor 16 and allow it to rotate in a substantially perpendicular direction to the wind. The rotation movement is converted to electric power by the generator 18 and is usually supplied to the utility grid as known to a person having ordinary skill in the art.

In the context of the description below, the term "longitudinal" or "length" refers to the direction extending from a hub or root end 28 (i.e., adjacent the central hub 20) of the rotor blade 22 to a tip end 30 of the rotor blade 22 (along a longitudinal axis L). The term "chord" or "width" refers to the direction extending from a leading edge of the rotor blade 22 to a trailing edge of the rotor blade 22. The term thickness refers to the direction extending between a windward side of the rotor blade 22 and a leeward side of the rotor blade 22.

As briefly explained above, a previous spar 200 is illustrated in Fig. 2 and is formed by a leading web 202, windward cap 204, leeward cap 206 and an additional trailing web 208 each coupled together at a root end 210 of the spar 200. The leading web 202, windward cap 204, leeward cap 206, and additional trailing web 208 each define a partially-circular cross section at the root end 210 which then flattens out in a direction toward the tip end (not shown in Fig. 2) of the spar 200. In this regard, the cross-sectional radius of curvature "r" (i.e., the radius of curvature defined by a cross section of the spar 200 in a transverse plane to the longitudinal axis L) of each of the webs 202, 208 and the caps 204, 206 increases, for example, continuously increases, in a direction from the root end 210 toward the tip end. In this regard, and with reference to Fig. 2, the cross-sectional radius of curvature r is equal to R, R being a set value at the root end 210, while the cross-sectional radius of curvature r is significantly greater than R away from the root end 210 toward the tip end. The leading web 202 is coupled to the windward cap 204 and the leeward cap 206 along the entire length of the leading web 202. By contrast, the additional trailing web 208 is only coupled to the windward cap 204 and the leeward cap 206 over a first portion 212 adjacent to the root end 210. A second portion 214 of the additional trailing web 208 extends away from the windward cap 204 and the leeward cap 206 toward a trailing edge of a rotor blade (not shown in Fig. 2). The spar 200 also includes a trailing web 216 directly coupled to the windward cap 204 and the leeward cap 206 along the second portion 214 of the additional trailing web 208.

As shown in Fig. 2, the second portion 214 thus includes a kinked area 218 where the additional trailing web 208 breaks away from the windward cap 204 and the leeward cap 206, the kinked area 218 being defined by a rapid change in slope along a longitudinal direction of the spar 200. The kinked area 218 is further illustrated by a spine 220 defined along the middle or bisection of the additional trailing web 208. The spine 220 generally defines a main load path for the trailing web 208. Notably, in the configuration shown in Fig. 2, this main load path has significant curvature in the kinked area 218. Consequently, the additional trailing web 208 may be weakened at the kinked area 218 and the spar 200 could potentially buckle at the kinked area 218 under load. However, the length of coupling between the first portion 212 of the additional trailing web 208 and the caps 204, 206 cannot be reduced to, in essence, "straighten" this kinked area 218 out because shortening that bonding area increases loading stresses dramatically in the spar 200, which may, for example, result in premature failure.

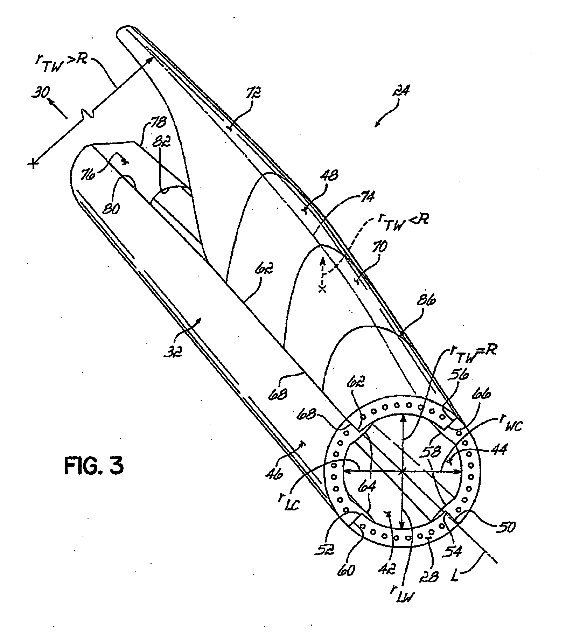

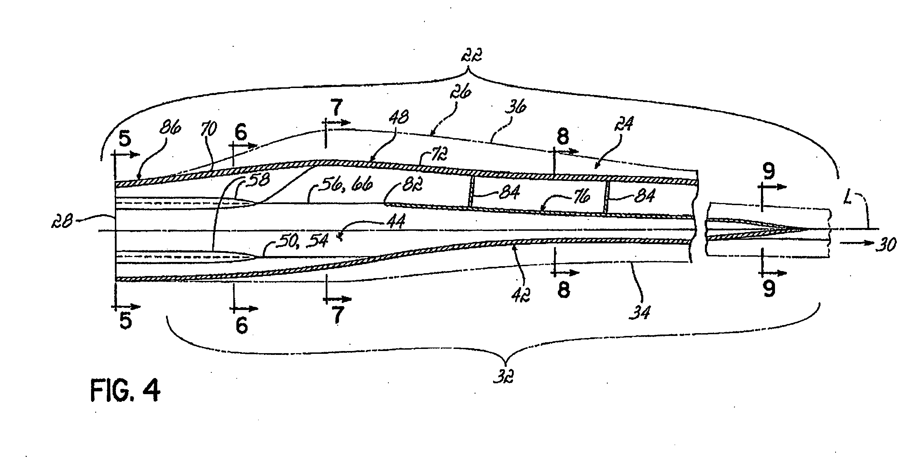

In view of these problems, and with reference to Figs. 3-9, a rotor blade 22 and spar 24 according to an exemplary embodiment of the invention is shown. The rotor blade 22 includes an outer shell 26 (shown in phantom in Figs. 4-9) having a root end 28 configured to be coupled to the central hub 20. The outer shell 26 also includes a tip end 30 spaced longitudinally from the central hub 20 and an intermediate portion 32 between the root end 28 and the tip end 30 (Fig. 1). The outer shell 26 also includes a leading edge 34 and a trailing edge 36 defining a width of the rotor blade 22, and a windward side 38 and leeward side 40 defining a thickness of the rotor blade 22. The leading edge 34, trailing edge 36, windward side 38, and leeward side 40 of the outer shell 26 collectively define an aerodynamic profile for the rotor blade 22. Although a particular profile and shape of the outer shell 26 are illustrated in the cross-sectional views of Figs. 4-9, it will be appreciated that the specific profile and shape of the outer shell 26 may be modified without departing from the scope of this invention.

Broadly speaking, the spar 24 forms a longitudinally-extending hollow structure extending from the root end 28 toward the tip end 30 of the outer shell 26. The spar 24 is used to transfer tensile, compressive, and torsion loads from the outer shell 26 to the central hub 20. Consequently, the below-described elements of the spar 24 are positioned as close as possible to the leading edge 34, trailing edge 36, windward side 38, and leeward side 40 of the outer shell 26. In the exemplary embodiment illustrated, the spar 24 is formed in four quadrants by four separate members: a leading web 42, a windward cap 44, a leeward cap 46, and a trailing web 48. Each of these webs 42, 48 and caps 44, 46 is formed from a fibrous material such as carbon fiber, glass fiber, or basalt fiber. It will be understood that other fibrous or structural materials may be used to form the various components of the spar 24.

As shown most clearly in Figs. 3 and 4, the leading web 42 extends longitudinally from the root end 28 toward the tip end 30 in close relation to the leading edge 34 of the outer shell 26. The leading web 42 includes a windward edge 50 and a leeward edge 52. The leading web 42 defines a partially-circular transverse cross section at the root end 28 and then flattens out toward the tip end 30, as is generally conventional. In this regard, the leading web 42 defines a cross-sectional radius of curvature r_{LW} (i.e., the radius of curvature defined by a cross section of the leading web 42 in a transverse plane to the longitudinal axis L) that generally increases along substantially the entire length of the spar 24. For example, the cross-sectional radius of curvature r_{LW} of the leading web 42 may continuously increase from an initial value R along the length of the spar 24, especially adjacent the root end 28.

The windward cap 44 also extends longitudinally from the root end 28 toward the tip end 30. The windward cap 44 may be located in close relationship with the windward side 38 of the outer shell 26 such that the windward cap 44 partially defines the aerodynamic profile of the rotor blade 22 in certain areas. The windward cap 44 includes a first edge 54 and a second edge 56. The first edge 54 of the windward cap 44 is directly connected to the windward edge 50 of the leading web 42 along substantially the entire length of the windward cap 44 and leading web 42. It will be understood that "direct connection" in this description refers to abutting surfaces or edges that may be mechanically or adhesively joined together by any conventional process. The windward cap 44 further includes edge projections 58 formed at the first edge 54 and the second edge 56. The edge projection 58 at the first edge 54 is configured to overlap a portion of the interior of the leading web 42 at the connection to the windward cap 44, thereby increasing the surface area of connection between these spar elements. It will be appreciated that the edge projections 58 may not be included in some alternative embodiments of the spar 24. The windward cap 44 defines a partially-circular transverse cross section at the root end 28 and then flattens out toward the tip end 30, as is generally conventional. In this regard, the windward cap 44 defines a cross-sectional radius of curvature r_{WC} that generally increases along substantially the entire length of the spar 24. For example, the cross-sectional radius of curvature r_{WC} of the windward cap 44 may continuously increase from an initial value R along the length of the spar 24, especially adjacent the root end 28.

In a similar manner as the windward cap 44, the leeward cap 46 extends longitudinally from the root end 28 toward the tip end 30. The leeward cap 46 may be located in close relationship with the leeward side 40 of the outer shell 26 such that the leeward cap 46 partially defines the aerodynamic profile of the rotor blade 22 in certain areas. The leeward cap 46 includes a first edge 60 and a second edge 62. The first edge 60 of the leeward cap 46 is directly connected to the leeward edge 52 of the leading web 42 along substantially the entire length of the leeward cap 46 and leading web 42. The leeward cap 46 further includes edge projections 64 formed at the first edge 60 and the second edge 62. The edge projection 64 at the first edge 60 is configured to overlap a portion of the interior of the leading web 42 at the connection to the leeward cap 46, thereby increasing the surface area of connection between these spar elements. It will be appreciated that the edge projections 64 may not be included in some alternative embodiments of the spar 24. The leeward cap 46 defines a partially-circular transverse cross section at the root end 28 and then flattens out toward the tip end 30, as is generally conventional. In this regard, the leeward cap 46 defines a cross-sectional radius of curvature r_{LC} that generally increases along substantially the entire length of the spar 24. For example, the cross-sectional radius of curvature r_{LC} of the leeward cap 46 may continuously increase from an initial value R along the length of the spar 24, especially adjacent the root end 28.

The trailing web 48 extends longitudinally from the root end 28 toward the tip end 30 in close relation to the trailing edge 36 of the outer shell 26. The trailing web 48 includes a windward edge 66 and a leeward edge 68. The trailing web 48 is directly connected to the windward cap 44 and the leeward cap 46 along a first portion 70 of the trailing web 48, the first portion 70 extending from the root end 28 to the intermediate portion 32 of the spar 24. In this regard, the windward edge 66 is directly connected to the second edge 56 and corresponding edge projection 58 of the windward cap 44 along the first portion 70, while the leeward edge 68 is directly connected to the second edge 62 and corresponding edge projection 64 of the leeward cap 46 along the first portion 70. The trailing web 48 also includes a second portion 72 spaced from the windward cap 44 and the leeward cap 46 such that the trailing web 48 is positioned closer to the trailing edge 36 of the outer shell 26. The second portion 72 extends from the intermediate portion 32 of the spar 24 toward the tip end 30. It will be understood that while the trailing web 48 is shown in Fig. 4 as terminating before the tip end 30 and continuously spaced from the windward cap 44 and the leeward cap 46 along the second portion 72, other embodiments may include a reconnection of the trailing web 48 to the windward cap 44 and the leeward cap 46 adjacent to the tip end 30.

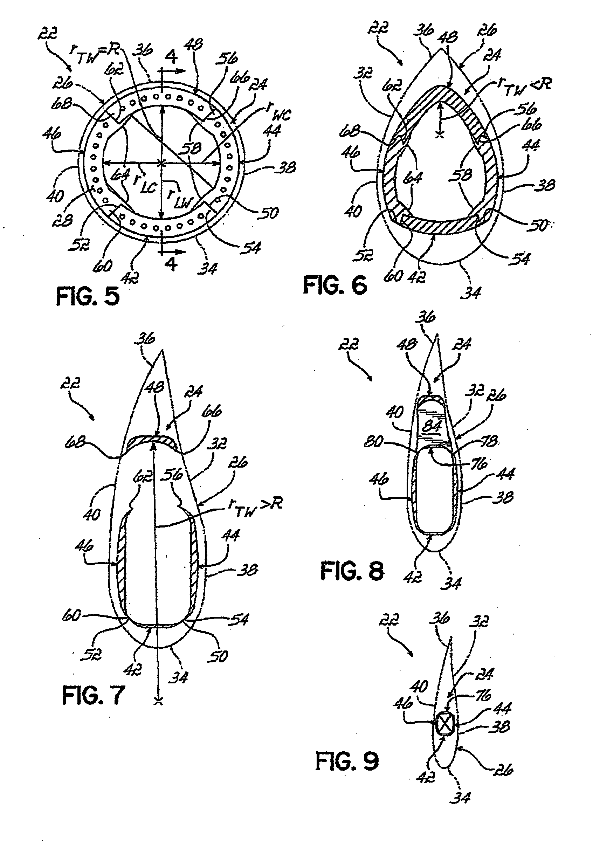

As shown most clearly in Fig. 5, the trailing web 48 defines a partially-circular cross section having a cross-sectional radius of curvature r_{TW} equal to an initial radius of curvature value R at the root end 28. The cross-sectional radius of curvature r_{TW} of the trailing web 48 generally decreases along the first portion 70 (e.g., decreases in a continuous manner, especially near the root end 28), thereby becoming more convex as shown in Fig. 6. In this regard, the convex cross section of the first portion 70 of the trailing web 48 transitions from partially-circular to partially-elliptical in the direction of the tip end 30. From this partially-elliptical region, the cross-sectional radius of curvature r_{TW} of the trailing web 48 then generally increases along the second portion 72 (e.g., increases in a continuous manner, especially near the partially-elliptical region) to flatten out the trailing web 48 from the intermediate portion 32 toward the tip end 30 of the spar 24, as illustrated in Figs. 7 and 8. This decreasing and increasing cross-sectional radius of curvature r_{TW} allows the trailing web 48 to stay directly connected to the windward cap 44 and the leeward cap 46 along the first portion 70 while also alleviating the aforementioned problems of a kinked load path, as described in further detail below. It will be understood that the generally convex cross section of the first portion 70 may also define different non-elliptical shapes with a decreasing cross-sectional radius of curvature r_{TW} along the first portion 70 in alternative embodiments.

Shown most clearly in Fig. 3, the trailing web 48 further defines a longitudinal spine 74 that generally bisects or runs along the center of the trailing web 48. The spine 74 broadly defines a load path for the spar 24 along the length of the trailing web 48. As discussed previously, a conventional spar 200 has a kinked area in the load path that may cause buckling of the spar 200 under load. However, the spine 74 of the trailing web 48 in the exemplary embodiment does not have such a kinked area because the spine 74 defines a generally straight load path at least along the first portion 70 of the trailing web 48 and also at the junction of the first portion 70 and the second portion 72. This generally straight load path is more clearly shown in Fig. 4, where the cross section is generally taken through the spine 74. In this regard, the spine 74 has a relatively small (e.g., about zero) longitudinal curvature (e.g., curvature in a direction from the root end 28 toward the tip end 30) along the first portion 70 and at the junction of the first portion 70 and the second portion 72. Consequently, the trailing web 48 does not include a problematic kinked load path that could lead to buckling of the spar 24 under a load applied to the rotor blade 22. It will be understood that the longitudinal curvature of the spine 74 may not be equal to zero to allow for some contour of the trailing web 48, but there is no readily identifiable kinked portion or region of rapidly changing slope of the spine 74 in accordance with the exemplary embodiment.

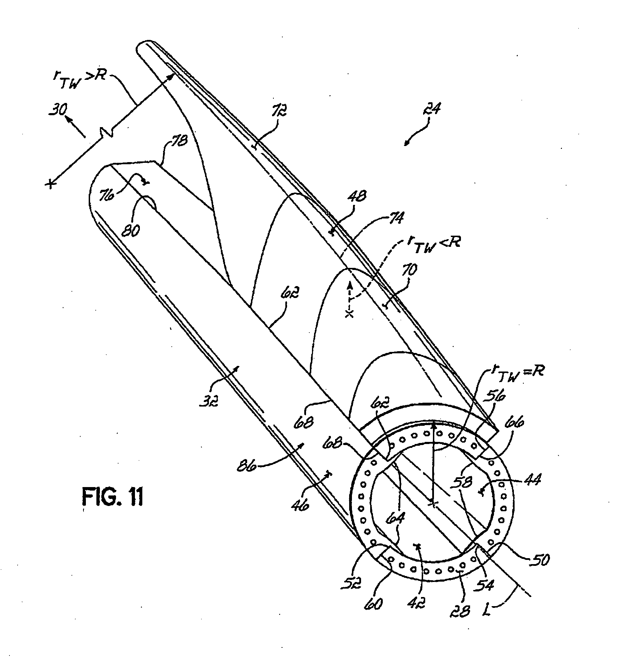

The spar 24 may also include a secondary trailing web 76 as shown in Figs. 3 and 4. The secondary trailing web 76 is generally flat and includes a windward edge 78 and a leeward edge 80. In the exemplary embodiment, the secondary trailing web 76 is coupled to the windward cap 44 and the leeward cap 46 along at least a part of the second portion of the trailing web 48. Thus, the windward edge 78 of the secondary trailing web 76 is directly connected to the second edge 56 of the windward cap 44 from the intermediate portion 32 and toward the tip end 30 of the spar 24. Likewise, the leeward edge 80 of the secondary trailing web 76 is directly connected to the second edge 62 of the leeward cap 46 from the intermediate portion 32 and toward the tip end 30 of the spar 24. The secondary trailing web 76 provides another structural member to support loading of the rotor blade 22 and the spar 24. The secondary trailing web 76, the leading web 42, the windward cap 44, and the leeward cap 46 collectively define a generally rectangular cross section for the spar 24 along at least a portion of the second portion 72 of the trailing web 48. In the exemplary embodiment, the secondary trailing web 76 has a front end 82 that terminates underneath the second portion 72 of the trailing web 48. It will be understood that the secondary trailing web 76 could be extended such that the front end 82 is positioned adjacent the root end 28 of the spar 24 without departing from the scope of this invention. Such an alternative embodiment is shown in Fig. 11 and described more fully below.

The spar 24 may also include one or more spacing members 84 disposed between the second portion 72 of the trailing web 48 and the remainder of the spar 24. In this regard, the spacing members 84 abut the trailing web 48 and may abut one or more of the windward cap 44, the leeward cap 46, and the secondary trailing web 76. The spacing members 84 are formed from generally planar carbon panels or other structural material in the exemplary embodiment. The spacing members 84 aid in manufacturing and may further transfer loads between the longitudinal members of the spar 24 to ensure that the trailing web 48 remains disposed in close relationship to the trailing edge 36 of the outer shell 26. It will be appreciated that the spar 24 may not include spacing members 84 in alternative non-illustrated embodiments.

The exemplary embodiment of the spar 24 and the rotor blade 22 shows that the leading web 42, windward cap 44, leeward cap 46, and trailing web 48 form independent quadrants of a root portion 86 of the spar 24 along the first portion 70 of the trailing web 48. This construction allows the various webs 42, 48 and caps 44, 46 to be molded and assembled to define the root portion 86 with a generally smooth external contour. This smooth external contour is desirable in areas where the outer shell 26 is disposed adjacent to the spar 24, such as the root portion 86, because the outer shell 26 must also define a smooth contour for aerodynamic efficiency.

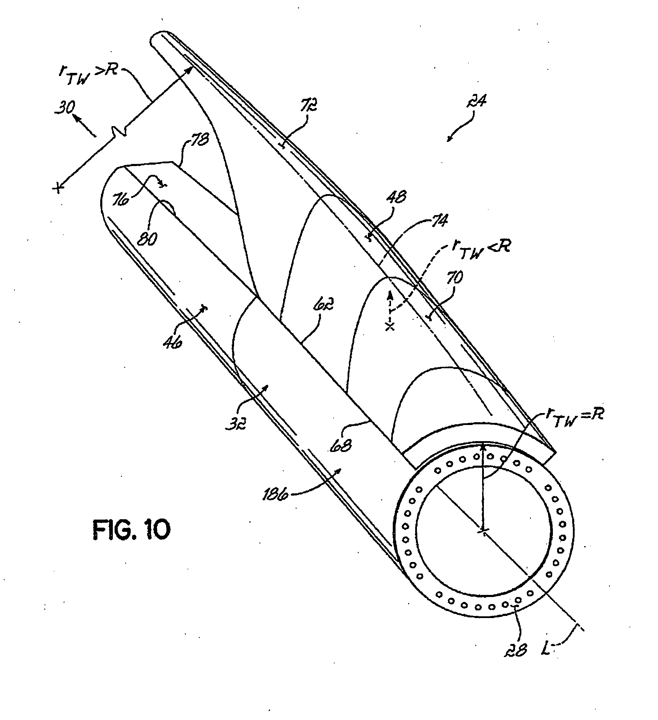

It will be understood that the trailing web 48 of the present invention may be incorporated in alternative embodiments wherein the root portion 86 is formed by winding a sheet of reinforcing material around a mandrel, as well understood in the rotor blade art. For example, Fig. 10 illustrates an alternative embodiment having a spar 24 with a wound root portion 186 formed by winding glass fiber material about a mandrel. The aforementioned leading web 42, windward cap 44, leeward cap 46, and secondary trailing web 76 extend in this embodiment from the wound root portion 186 toward the tip end 30. The first portion 70 of the trailing web 48 is adhesively or mechanically coupled with the wound root portion 186 in this embodiment as shown in Fig. 10.

Fig. 11 illustrates another alternative embodiment of the spar 24. In this embodiment, the spar 24 is formed by the aforementioned leading web 42, windward cap 44, leeward cap 46, and secondary trailing web 76, each of which extends from the root end 28 toward the tip end 30. In this embodiment, the trailing web 48 adhesively or mechanically couples to the secondary trailing web 76 along the first portion 70 of the trailing web 48 as shown in Fig. 11. It will be understood that additional spar configurations having the trailing web 48 are also within the scope of the present invention.

In summary, the spar 24 of the present invention includes at least one web that has a cross-sectional radius of curvature that generally decreases along a first portion and then may generally increase along a second portion. In this regard, in an exemplary embodiment, the web starts in a partially-circular shape at the root end 28 of the spar 24 and then proceeds to become more convex (e.g., more elliptical) in the first portion before flattening out in the second portion. This web therefore can have a long bonding area with other members of the spar 24 to increase stress resistance of the spar 24, while avoiding a kinked or rapidly sloped or curved load path along the web which may potentially form a buckling point for the spar 24 under load. The spar 24 improves the load capacity and life of a rotor blade 22, thereby improving efficiency in the operation of a wind turbine 10.

While the present invention has been illustrated by a description of various preferred embodiments and while these embodiments have been described in some detail, it is not the intention of the inventors to restrict or in any way limit the scope of the appended claims to such detail. Additional advantages and modifications will readily appear to those skilled in the art. For example, the web having a generally decreasing radius of curvature followed by an increasing radius of curvature is described as a trailing web 48 in the exemplary embodiment, but this web may be provided as an additional leading web or windward or leeward cap in other embodiments. Thus, the various features of the invention may be used alone or in any combination depending on the needs and preferences of the user.

## Claims

1. A rotor blade (22) for a wind turbine, comprising:
an outer shell (26) having a root end (28); a tip end (30), and an intermediate portion (32) between the root end and the tip end; and
a spar (24) for transferring loads from the outer shell and extending longitudinally within the outer shell from the root end toward the tip end, the spar including at least one trailing web (48) having a first portion (70) with a cross-sectional radius of curvature that decreases from the root end to the intermediate portion (32), and a leading web (42) coupled to a windward cap (44) and a leeward cap (46) along a length of the spar (24),
wherein the trailing web (48) is coupled to the windward cap (44) and the leeward cap (46) along the first portion (70) of the trailing web (48); and is spaced from the windward cap (44) and the leeward cap (46) along a second portion (72) of the trailing web (48).

2. A rotor blade according to claim 1 , wherein the at least one web defines a partially-circular cross section at the root end and a partially-elliptical cross section along the first portion away from the root end.

3. A rotor blade according to claims 1 or 2, wherein the at least one web defines a longitudinal spine bisecting the at least one web, the longitudinal spine defining a generally straight load path along the first portion of the at least one web.

4. A rotor blade according to claim 3, wherein the longitudinal spine has a longitudinal curvature of about zero along a substantial portion of the first portion of the at least one web.

5. A rotor blade according to claims 1-4, wherein the spar further comprises a secondary trailing web spaced from the trailing web and coupled to the leeward cap and the windward cap along the second portion of the trailing web.

6. A rotor blade according to claims 1-5, wherein the spar further comprises at least one spacing member disposed between the trailing web and the leeward and windward caps along the second portion of the trailing web.

7. A rotor blade according to any of claims 1 -4, wherein the spar further comprises a wound root portion, and the at least one web is a trailing web coupled to the wound root portion along the first portion of the trailing web.

8. A rotor blade according to any of claims 1 -4, wherein the spar further comprises a leading web coupled to a windward cap and a leeward cap along a length of the spar and a first trailing web coupled to the windward cap and the leeward cap along the length of the spar, and the at least one web is a second trailing web coupled to the first trailing web along the first portion of the second trailing web.

9. A rotor blade according to any of claims 1 -8, wherein the spar further comprises a second portion with a cross-sectional radius of curvature that increases from the intermediate portion toward the tip end.

10. A wind turbine comprising:
a tower;
a hub supported by the tower; and
a plurality of rotor blades according to any of claims 1-9.

11. A method for manufacturing a rotor blade that extends in a longitudinal direction from a root end to a tip end with an intermediate portion between the root end and the tip end, the method comprising:
forming a trailing web having a first portion and a second portion, the first portion defined by a cross-sectional radius of curvature that generally decreases from an initial value to an intermediate value along the length of the first portion;
coupling a leading web to at least one cap, each of the leading web and the at least one cap extending from the root end to the tip end; and
coupling the trailing web to the at least one cap such that the first portion is engaged with the at least one cap from the root end to the intermediate portion and the second portion is spaced from the at least one cap from the intermediate portion toward the tip end.

12. A method according to claim 11, wherein the trailing web defines a partially-circular cross section at the root end and a partially-elliptical cross section along the first portion away from the root end.

13. A method according to claims 11 or 12, wherein the trailing web defines a longitudinal spine bisecting the trailing web, the longitudinal spine defining a generally straight load path along the first portion of the trailing web.

## Patentansprüche

1. Rotorschaufel (22) für eine Windenergieanlage, umfassend:
eine Außenschale (26) mit einem Wurzelende (28), einem Spitzenende (30) und einem Zwischenabschnitt (32) zwischen dem Wurzelende und dem Spitzenende; und
einen Holm (24) zum Übertragen von Belastungen von der Außenschale und der sich in Längsrichtung innerhalb der Außenhülle von dem Wurzelende zu dem Spitzenende hin erstreckt, wobei der Holm mindestens einen hinteren Steg (48) mit einem ersten Abschnitt (70), der einen Querschnittskrümmungsradius aufweist, welcher von dem Wurzelende zu dem Zwischenabschnitt (32) abnimmt und einen vorderen Steg (42) aufweist, der mit einem luvseitigen Gurt (44) und einem leeseitigen Gurt (46) entlang einer Länge des Holmes (24) verbunden ist,
wobei der hintere Steg (48) mit dem luvseitigen Gurt (44) und dem leeseitigen Gurt (46) entlang von dem ersten Abschnitt (70) des hinteren Steges (48) verbunden ist; und von dem luvseitigen Gurt (44) und dem leeseitigen Gurt (46) entlang eines zweiten Abschnitts (72) des hinteren Steges (48) beabstandet ist.

2. Rotorschaufel gemäß Anspruch 1, wobei der mindestens eine Steg einen teilweise kreisförmigen Querschnitt an dem Wurzelende und einen teilweise elliptischen Querschnitt entlang dem ersten Abschnitt weg von dem Wurzelende definiert.

3. Rotorschaufel gemäß den Ansprüchen 1 oder 2, wobei der mindestens eine Steg einen in Längsrichtung verlaufenden Dorn definiert, welcher den mindesten einen Steg halbiert, wobei der in Längsrichtung verlaufende Dorn einen im Allgemeinen geradlinigen Lastpfad entlang des ersten Abschnitts des mindestens einen Stegs definiert.

4. Rotorschaufel gemäß Anspruch 3, wobei der in Längsrichtung verlaufende Dorn eine Längskrümmung von ungefähr Null entlang eines wesentlichen Teilstücks des ersten Abschnitts des mindestens einen Stegs aufweist.

5. Rotorschaufel gemäß den Ansprüchen 1-4, wobei der Holm ferner einen zweiten hinteren Steg aufweist, der von dem hinteren Steg beabstandet ist und mit dem leeseitigen Gurt und dem luvseitigen Gurt entlang eines zweiten Abschnitts des hinteren Stegs verbunden ist.

6. Rotorschaufel gemäß den Ansprüchen 1-5, wobei der Holm ferner mindestens ein Abstandselement aufweist, das zwischen dem hinteren Steg und dem leeseitigen und luvseitigen Gurt entlang des zweiten Abschnitts des hinteren Steges angeordnet ist.

7. Rotorschaufel gemäß einem der Ansprüche 1-4, wobei der Holm ferner einen gewundenen Wurzelabschnitt aufweist und der mindestens eine Steg ein hinterer Steg ist, der mit dem gewundenen Wurzelabschnitt entlang des ersten Abschnitts des hinteren Steges verbunden ist.

8. Rotorschaufel gemäß einem der Ansprüche 1-4, wobei der Holm ferner einen vorderen Steg, der mit einem luvseitigen Gurt und einem leeseitigen Gurt entlang einer Länge des Holms verbunden ist und einen ersten hinteren Steg aufweist, der mit dem luvseitigen Gurt und dem leeseitigen Gurt entlang der Länge des Holms verbunden ist und der mindestens eine Steg ist ein zweiter hinterer Steg, welcher mit dem ersten hinteren Steg entlang des ersten Abschnitts des zweiten hinteren Steges verbunden ist.

9. Rotorschaufel gemäß einem der Ansprüche 1-8, wobei der Holm ferner einen zweiten Abschnitt mit einem Querschnittskrümmungsradius aufweist, welcher von dem Zwischenabschnitt zu dem Spitzenende hin ansteigt.

10. Windenergieanlage, umfassend:
einen Turm;
eine Nabe, die durch den Turm gelagert wird; und
mehrere Rotorschaufeln gemäß einem der Ansprüche 1-9.

11. Verfahren zur Herstellung einer Rotorschaufel, die sich in einer Längsrichtung von einem Wurzelende zu einem Spitzenende mit einem Zwischenabschnitt zwischen dem Wurzelenden und dem Spitzenende erstreckt, wobei das Verfahren umfasst:
Ausbilden eines hinteren Steges mit einem ersten Abschnitt und einem zweiten Abschnitt, wobei der erste Abschnitt durch einen Querschnittskrümmungsradius definiert ist, der im Allgemeinen von einem Anfangswert zu einem Zwischenwert entlang der Länge des ersten Abschnitts abnimmt;
Verbinden eines vorderen Steges mit mindestens einem Gurt, wobei jeweils der vordere Steg und der mindestens eine gurt sich von dem Wurzelende zu dem Spitzenende hin erstrecken; und
Verbinden des hinteren Steges mit dem mindestens einen Gurt derart, dass der erste Abschnitt mit des mindestens einen Gurtes von dem Wurzelende zu dem Zwischenabschnitt in Eingriff steht und der zweite Abschnitt des mindestens einen Gurtes von dem Zwischenabschnitt in Richtung auf das Spitzenende beabstandet ist.

12. Verfahren gemäß Anspruch 11, wobei der hintere Steg einen teilweise kreisförmigen Querschnitt an dem Wurzelende und einen teilweise elliptischen Querschnitt entlang dem ersten Abschnitt weg von dem Wurzelende definiert.

13. Verfahren gemäß den Ansprüchen 11 oder 12, wobei der hintere Steg einen in Längsrichtung verlaufenden Dorn definiert, welcher den mindesten einen Steg halbiert, wobei der in Längsrichtung verlaufende Dorn einen im Allgemeinen geradlinigen Lastpfad entlang des ersten Abschnitts des mindestens einen Steges definiert.

## Revendications

1. Pale de rotor (22) destinée à une éolienne, qui comprend :
une coque externe (26) qui possède une extrémité d'emplanture (28) ; une extrémité de pointe (90) ; et une partie intermédiaire (32) entre l'extrémité d'emplanture et l'extrémité de pointe ; et
un longeron (24) destiné à transférer les charges depuis la coque externe, et qui s'étend longitudinalement dans la coque externe depuis l'extrémité d'emplanture vers l'extrémité de pointe, le longeron comprenant au moins une âme de fuite (48) qui possède une première partie (70) qui présente un rayon de courbure transversal qui diminue entre l'extrémité d'emplanture et la partie intermédiaire (32), et une âme d'attaque (42) reliée à une coiffe face au vent (44) et à une coiffe dos au vent (46) le long du longeron (24) ;
dans laquelle l'âme de fuite (48) est reliée à la coiffe face au vent (44) et à la coiffe dos au vent (46) le long de la première partie (70) de l'âme de fuite (48) ; et est espacée de la coiffe face au vent (44) et de la coiffe dos au vent (46) le long d'une seconde partie (72) de l'âme de fuite (48).

2. Pale de rotor selon la revendication 1, dans laquelle au moins une âme définit une section transversale partiellement circulaire au niveau de l'extrémité d'emplanture, et une section transversale partiellement elliptique le long de la première partie, à l'écart de l'extrémité d'emplanture.

3. Pale de rotor selon la revendication 1 ou 2, dans laquelle au moins une âme définit une épine longitudinale qui croise ladite âme, ladite épine longitudinale définissant un trajet de charge généralement droit le long de la première partie de ladite âme.

4. Pale de rotor selon la revendication 3, dans laquelle l'épine longitudinale possède une courbure longitudinale d'environ zéro le long d'une partie substantielle de la première partie de ladite âme.

5. Pale de rotor selon les revendications 1 à 4, dans laquelle le longeron comprend une âme de fuite secondaire espacée de l'âme de fuite et reliée à la coiffe dos au vent et à la coiffe face au vent le long de la seconde partie de l'âme de fuite.

6. Pale de rotor selon les revendications 1 à 5, dans laquelle le longeron comprend en outre au moins un élément d'espacement disposé entre l'âme de fuite et les coiffes dos et face au vent le long de la seconde partie de l'âme de fuite.

7. Pale de rotor selon l'une quelconque des revendications 1 à 4, dans laquelle le longeron comprend en outre une partie d'emplanture enroulée, et ladite âme est une âme de fuite reliée à la partie d'emplanture enroulée le long de la première partie de l'âme de fuite.

8. Pale de rotor selon l'une quelconque des revendications 1 à 4, dans laquelle le longeron comprend en outre une âme d'attaque reliée à une coiffe face au vent et à une coiffe dos au vent le long du longeron, et une première âme de fuite reliée à la coiffe face au vent et à la coiffe dos au vent le long du longeron, et ladite âme est une seconde âme de fuite reliée à la première âme de fuite le long de la première partie de la seconde âme de fuite.

9. Pale de rotor selon l'une quelconque des revendications 1 à 8, dans laquelle le longeron comprend en outre une seconde partie qui présente un rayon de courbure transversal qui diminue entre la partie intermédiaire et l'extrémité de pointe.

10. Éolienne qui comprend :
une tour ;
un moyeu supporté par la tour ; et
une pluralité de pales de rotor selon l'une quelconque des revendications 1 à 9.

11. Procédé de fabrication d'une pale de rotor qui s'étend dans une direction longitudinale entre une extrémité d'emplanture et une extrémité de pointe avec une partie intermédiaire entre l'extrémité d'emplanture et l'extrémité de pointe, le procédé comprenant :
la formation d'une âme de fuite qui possède une première partie et une seconde partie, la première partie étant définie par un rayon de courbure transversal qui diminue généralement entre une valeur initiale et une valeur intermédiaire le long de la première partie ;
le raccordement d'une âme d'attaque à au moins une coiffe, chacune de l'âme d'attaque et de ladite coiffe s'étendant entre l'extrémité d'emplanture et l'extrémité de pointe ; et
le raccordement de l'âme de fuite à ladite coiffe de sorte que la première partie soit engagée avec ladite coiffe entre l'extrémité d'emplanture et la partie intermédiaire, et que la seconde partie soit espacée de ladite coiffe entre la partie intermédiaire et l'extrémité de pointe.

12. Procédé selon la revendication 11, dans lequel l'âme de fuite définit une section transversale partiellement circulaire au niveau de l'extrémité d'emplanture, et une section transversale partiellement elliptique le long de la première partie, à l'écart de l'extrémité d'emplanture.

13. Procédé selon la revendication 11 ou 12, dans lequel l'âme de fuite définit une épine longitudinale qui croise l'âme de fuite, l'épine longitudinale définissant un trajet de charge généralement droit le long de la première partie de l'âme de fuite.
